# EUROPÄISCHE PATENTSCHRIFT

(11) **EP 1 248 925 B1**
(45) Veröffentlichungstag und Bekanntmachung des Hinweises auf die Patenterteilung: **01.02.2006**
(21) Anmeldenummer: 01980181.0
(22) Anmeldetag: 20.09.2001
(51) Int. Cl.: F16K 1/20

(54) **EXZENTERVENTIL**
ECCENTRIC VALVE
SOUPAPE EXCENTRIQUE

(30) Priorität: 30.10.2000 DE 10053850
(43) Veröffentlichungstag der Anmeldung: 16.10.2002
(73) Patentinhaber: ROBERT BOSCH GMBH, 70442 Stuttgart (DE)
(72) Erfinder: SCHMIDT, Roland, 77815 Buehl (DE); ROCKLAGE, Gerta, 71272 Renningen (DE); VOLLMER, Dirk, 77815 Buehl (DE); TAGHOUTI, Nizar, 76137 Karlsruhe (DE); BERLING, Claude, F-67410 Drusenheim (FR)
(86) Internationale Anmeldenummer: PCT/DE2001/003623
(87) Internationale Veröffentlichungsnummer: WO 2002/037001

(56) Entgegenhaltungen:
- US-A- 4 073 473
- US-A- 5 170 992
- US-A- 5 186 433

## Beschreibung

### Stand der Technik

Die Erfindung geht aus von einem Ventil zur Steuerung und Regulierung der Kühlmittelvolumenströme in einem Kraftfahrzeug nach dem Oberbegriff der unabhängigen Ansprüche.

Um den Verbrennungsmotor eines Kraftfahrzeuges vor dem Überhitzen zu schützen und die Abwärme des Verbrennungsmotors zur Heizung des Fahrgastraumes nutzen zu können, wird in Fahrzeugen ein Kühlmittel umgepumpt, das die überflüssige Wärme des Motors aufnimmt und im gewünschten Maße abführen kann. Der Heiz- bzw. Kühlkreislauf eines Kraftfahrzeuges umfasst im Allgemeinen verschiedene Zweige wie beispielsweise einen KühlerZweig, einen Bypass-Zweig oder auch einen Heizungswärmetauscher-Zweig. Über einen Kühler im Kühlerzweig kann die überflüssige Wärmemenge des Kühlmittels an die Umgebung abgegeben werden. Ein Heizungswärmetauscher macht andererseits die zur Verfügung stehende Wärmemenge des Kühlmittels zur Beheizung des Fahrgastraumes nutzbar. Die Verteilung des Kühlmittelstromes auf die verschiedenen Zweige des Kühl- und Heizkreislaufes eines Kraftfahrzeuges wird über mindestens ein Ventil gesteuert. Die gewünschte Kühlmitteltemperatur wird durch Mischen eines gekühlten und eines ungekühlten Kühlmittelstroms eingestellt. So erfolgte die Regelung des Mischverhältnisses zwischen dem Kühler- und dem Bypass-Zweig bisher zumeist mit Hilfe eines dehnstoffgetriebenen, auf die Kühlmitteltemperatur reagierenden Thermostatventils.

Prinzipbedingt kann mit dieser Technik nur eine einzige definierte Mischungstemperatur für das Kühlmittel eingestellt werden, die unabhängig von der Lastsituation des Verbrennungsmotors ist. Die langen Reaktionszeiten eines solchen Thermostatventils stellen einen nicht zu vernachlässigenden Nachteil dieser Regeltechnik dar, der sich negativ auf eine optimale Temperierung des Motors auswirkt. Zur gewünschten Temperierung eines Verbrennungsmotors sind unterschiedliche Kühlmitteltemperaturen, die der jeweiligen Lastsituation des Motors entsprechen, und kurze Regelzeiten in den Kühlkreisläufen wünschenswert.

Ein Kennfeldthermostat, der heute ebenfalls zum Stand der Technik zu zählen ist, erlaubt die Einstellung zweier Temperaturniveaus für das Kühlmittel im Heiz- uns Kühlsystem eines Kraftfahrzeuges.

Ein Heizungswärmetauscher im Heiz- und Kühlsystem kann über zusätzlich eingesetzte, elektromagnetisch angetriebene Taktventile, wie sie beispielsweise in der DE 197 53 575 beschrieben sind, angesprochen werden. Das diskrete Öffnungsverhalten der Taktventile führt zu diskontinuierlichen Fließverhältnissen, die eine gezielte Steuerung des gewünschten Mischungsverhältnisses erschweren. Damit ist die Steuerung der Wärmeströme sowie der gewünschten Temperaturen in den anderen zweigen des Heiz- und Kühlsystems nicht in dem erforderlichen Maße möglich.

In der US-4,930,455 wird ein Drehklappenventil für den Fahrzeugbereich vorgestellt, das durch einen Elektromotor angesteuert wird. Dieses Ventil in der Art eines Klappenventils (Butterfly- oder auch Schmetterlingsventil) regelt den relativen Volumenstrom durch den Kühlkreislauf in Abhängigkeit eines elektrischen Steuersignals, welches im beschriebenen Fall aus der Kühlwassertemperatur abgeleitet wird.

Nachteilig bei dieser Art des Regelventils ist die Tatsache, dass auch bei geöffnetem Ventil Teile der den Durchfluss steuernden Ventilklappe als Hindernis im Strömungsvolumen verbleiben und damit den Strömungsquerschnitt reduzieren. Dies bedeutet einen Druckverlust über dem Ventil, der nur durch eine erhöhte Pumpleistung und damit durch einen erhöhten Energie- und Kostenaufwand kompensiert werden kann.

Als ebenfalls nachteilig bei diesem Ventiltypus muss die erforderliche mechanische Passgenauigkeit der beteiligten Komponenten zum Erreichen einer guten Abdichtung des Leitungsquerschnittes angesehen werden. Toleranzen in der Fertigung lassen sich zwar über ein elastisches Dichtmittel, das zwischen der eigentlichen Ventilklappe und dem Leitungsquerschnit vermittelt, auffangen, dieses Dichtmittel unterliegt aber aufgrund der teilweise sehr großen Temperaturdifferenzen im Heiz- und Kühlkreislauf selbst einer starken Variation seiner Ausdehnung.

Ein Klappenventil der in der US-4,930,455 beschriebenen Art erfordert aufgrund der großen Kontaktfläche des Dichtelementes mit dem Leitungsquerschnitt und nicht zuletzt auch aus den oben genannten Gründen eine erhöhte Verstellkraft beziehungsweise größere Drehmomente zum Schließen und Öffnen des Ventils, die mit der Notwendigkeit eines größeren Antriebsmotors verbunden sind. Dies erhöht die Kosten und vergrößert den erforderlichen Einbauraum und das Gewicht eines solchen Ventils.

Einhergehend mit den erforderlichen, relativ großen Verstellkräften bei der Betätigung eines Klappenventils nach der US-4,930,455 ergibt sich eine starke Verschleißanfälligkeit der Veschlussklappe des Ventils und im Speziellen des elastischen Dichtmittels, die die Lebensdauer eines solchen Ventils reduzieren kann.

Der mögliche hohe Verschmutzungsgrad des Kühlmittels eines Fahrzeuges beeinflusst zudem die Dichtigkeit eines Klappenventils negativ, so dass spezielle Maßnahmen, wie sie in der US-4,930,455 beschrieben und beansprucht werden, getroffen werden müssen, um Ablagerungen aus dem Ventilbereich zu entfernen.

Aus der Prozesstechnik sind so genannte Exzenterventile bekannt, bei denen die ventilklappe exzentrisch zum Ventilsitz angeordnet ist. Diese exzentrische Anordnung führt zu einer kombinierten Dreh- und Hubbewegung der Ventilklappe und minimiert so den Oberflächenkontakt zwischen dem Dichtelement und dem Ventilsitz während des Öffnens und Schließens des Ventils.

Aufgrund seiner relativ anspruchsvollen Geometrie und der kombinierten Dreh- und Hubbewegung beim Öffnen und Schließen erfordert ein Exzenterventil die Einhaltung sehr geringer Toleranzen bei der Fertigung. Abgesehen von den Fertigungstoleranzen kann es auch aufgrund von Temperatur- und Druckänderungen zu Undichtigkeiten im Exzenterventil kommen. Diese prinzipiellen Nachteile eines Exzenterventils verhinderten bisher die Anwendung dieses Prinzips im Automotive-Bereich.

In der US-5,186,433 wird ein Exzenterventil aus dem Gebiet der Prozesstechnik beschrieben, dessen Exzentrizität sich von aussen nachregeln lässt. Die Drehachse dieses Ventils ist in bekannter Weise exzentrisch gelagert und kann darüber hinaus durch ihre drehbaren und ebenfalls exzentrischen Lager verschoben werden. Damit ist prinzipiell eine nachträgliche, individuelle Anpassung des Ventils beispielsweise an bestehende Fertigungstoleranzen möglich.

Nachteilig bei dem in der US-5,186,433 beschriebenen Exzenterventil ist die aufwendige Anpassung des Ventilelementes ... an die jeweiligen Variationen an den Maßen des Ventils, die eine Verwendung dieses Ventilprinzips in großer Stückzahl ausschließt. Dudem ist eine optimale, dass heißt schnelle und kontinuierliche Anpassung des Ventilelementes auf veränderte Betriebsbedingungen auch mit dem in der US 5,186, 433 beschriebenen Exzenterventil nicht denktbar.

Aus der US 4,073,473 ist ein pneumatisch betätigbares Drehventil zur Steuerung von Volumenströmen bekannt, welches ein Ventilgehäuse mit einer Ventilkammer, von der ein Einlaßkanal und ein Auslasskanal abzweigen, besitzt. Das Ventil weist eine in der Ventilkammer angeordnete, um die Achse einer Welle drehbare Ventilklappe auf, deren Ventildichtkopf mit einem elastischen Ventilsitz der Ventilkammer zusammen wirkt. Die Ventilklappe ist dabei starr mit der Welle verbunden. Die die Ventilklappe antreibende Welle ist exzentrisch in der Ventilkammer des Drehventils angeordnet. Über die elastischen Mittel des Ventilsitzes wird bei dem Ventil der US 4,073,473 der sichere Verschluss des Ventils gewährleistet.

### Vorteile der Erfindung

Das erfindungsgemäße Ventil mit den Merkmalen des unabhängigen Anspruchs hat den Vorteil, ein in der Konstuktion einfaches und damit sehr kostengünstiges Ventil zu sein, das eine geringe Verschleißempfindlichkeit und eine hohe Unempfindlichkeit gegenüber einem eventuell stark verschmutzten Fluid aufweist. Damit wird das erfindungsgemäße Ventil den speziellen Anforderunge des "automotiv" in idealer Weise gerecht:

Da die Ventilklappe des erfindungsgemäßen Ventils das Ventilgehäuse aufgrund ihrer kombinierten Dreh- und Hubbewegung nur im Ventilsitz berührt, ist das Prinzip des Exzenterventits sehr unempfindlich gegen Verschmutzungen des zu regulierenden Volumenstroms. Die Ventilklappe selbst ist nicht zwischen Dichtungen eingeklemmt und bedarf daher auch nur vergleichsweise sehr geringer Verstellkräfte, sodass der Antrieb des erfindungsgemäßen Ventils kostengünstig ausfallen kann.

Durch eine relative Beweglichkeit des Dichtkopfes der Ventilklappe gegenüber dem Ventilgestänge kann sich der Dichtkopf selbstständig ausrichten und in seiner Lage an den Ventilsitz anpassen. Damit können Toleranzen in Winkel und Abstand der Ventilklappe zum Ventilsitz aufgefangen und ausgeglichen werden. Dies lässt sich in besonderem Maße durch die Verwendung einer zweiteiligen Ventilklappe mit einem Gelenk, insbesondere einem Kugelgelenk zwischen dem Ventildichtkopf und dem Ventilgestänge realisieren. Mit Hilfe des Kugelgelenkes ist es eine zweiachsige Beweglichkeit des Dichtkopfes gegenüber dem Ventilgestänge gegeben, die einen optimalen, selbstständigen und kontinuierlichen Ausgleich vorhandender Toleranzfehler im hohen Maße gewährleistet. So ist im speziellen nicht nur eine automatische Anpassung der Abdichtung bei Temperatur- oder Druckänderungen möglich, sondern auch ein selbstständiges Nachstellen des Ventils aufgrund von Verschleiß und Abrieb ist ebenfalls gegeben. Dies lässt sich besonderes dann vorteilhaft realisieren, wenn der Dichtkopf aus einem verschleißarmen Material hergestellt wird, sodass ein eventuell auftretender Abrieb am weicheren Ventilgehäuse durch eine selbstständige Anpassung der Lage des Dichtkopfes im Ventilsitz kompensiert werden kann.

Die Fuktionalität des Ventils kann somit durch die Auswahl geeigneter Materialpaarungen über eine deutlich verlängerte Lebensdauer erhalten bleiben.

Durch die in den weiteren Ansprüchen aufgeführten Maßnahmen sind vorteilhafte Weiterbildungen und Verbesserungen des in Anspruch 1 angegebenen Ventils möglich.

Ein Ventil-Dichtkopf, der als pilzförmiger Ventilteller ausgebildet ist, gewährleistet eine gute Anpassung der Ventilklappe an den Ventilsitz und damit eine optimale Abdichtung der Ventilöffnungen.

Die Ventilsitze des Ventils können einstückig mit der Ventilkammer ausgeformt werden, was eine zusätzliche Vereinfachung des Aufbaus und damit eine weitere Senkung der Produktionskosten des erfindungsgemäßen Ventils bedeutet.

Durch die zusätzliche Verwendung von elastischem Dichtmaterial für den Dichtkopf der Ventilklappe oder auf der Seite des Ventilsitzes lässt sich gegebenenfalls die Abdichtung der Ventilöffnungen erhöhen.

Die spezielle Form der Ventilklappe des erfindungsgemäßen Ventils sowie ihre exzentrische Lagerung in der Ventilkammer führt in vorteilhafter Weise dazu, dass bei geöffnetem Zustand des Ventils keine Versperrung des Strömungsquerschnittes im Ventil auftritt. Somit kann der Druckabfall über dem Ventil verringert werden, was dazu führt, das die entsprechende Pumpleistung im Kühlkreislauf geringer ausgelegt werden kann. Dies reduziert Kosten und Baugrößen der beteiligten Komponenten.

Eine stabilisierende Wirkung der Lage des Dichtkopfes im Ventilsitz ergibt sich, wenn die Strömungsrichtung des Fluids im Ventil von der Drehachse der Ventilklappe auf den Dichtkopf zu verläuft.

Mit dem beschriebenen Prinzip des Exzenterventils lässt sich neben einem 2-Wege Ventil auch eine 3 oder Mehr-Wege-Anordnung, wie es im Kühlkreislauf eines Automobils notwendig ist, in einfacher Weise realisieren. Denkbar ist ein 3-Wege-Ventil, das nur eine einzelne Ventilklappe zur Steuerung der relativen Durchflussmengen aufweist. Ebenso lässt sich aber auch eine zweite Ventilklappe in ein 3-Wege Ventil integrieren, so dass die zwei möglichen Ausgänge des Ventils von zwei getrennten Ventilklappen gesteuert werden.

Eine besonders einfache und vorteilhafte Konstruktion für das erfindungsgemäße Ventil ergibt sich, wenn die beide Ventilklappen auf derselben Welle (Drehachse) sitzen und von dieser angetrieben werden.

Unterschiedliche radiale Längen der Ventilklappen sind in einer gemeinsamen Ventilkammer möglich, so dass eine Anpassung der Form der Ventilkammer an spezielle bauliche Gegebenheiten bei dem erfindungsgemäßen Ventil einfach zu realisieren sind.

Die Welle, die die Bewegung der einen Ventilklappe (oder auch mehrerer ventilklappen) vermittelt, lässt sich im erfindungsgemäßen Ventil in sehr präziser Weise durch einen Stellantrieb bewegen. So kann beispielsweise über einen Elektromotor und ein zwischengeschaltetes Getriebe eine sehr genaue Ansteuerung der Ventilklappen erreicht werden. Der Elektromotor wiederum lässt sich durch ein Steuersignal, das beispielsweise aus der Motortemperatur abgeleitet wird, regeln. Damit ist die exakte Einstellung der jeweiligen Durchflussmengen und der sich daraus ergebenden Kühlmitteltemperaturen im Heiz-und Kühlsystem des Fahrzeuges möglich. Die Reaktions- und Steuerzeiten der aktiven Kühlflüssigkeitsregelung können so gegenüber den Möglichkeiten eines Thermostatventils deutlich reduziert werden. Der Kühlmittelfluss läßt sich in vorteilhafter Weise direkt der jeweiligen Motorlast anpassen und der Wirkungsgrad des Motors kann so verbessert werden.

Um möglich Probleme mit der Abdichtung der die Ventilklappen antreibenden Welle zu minimieren, ist es möglich, das Getriebe selbst in der Kühlflüssigkeit laufen zu lassen. Das Getriebe lässt sich vorteilhaft im Ventilgehäuse oder in einem mit dem Ventil verbundenen Gehäuse unterbringen. Dadurch wird die Anzahl der notwendigen, verschleissbehafteten Dichtungen gesenkt und die Gefahr, dass aufgrund von Verschleiss des Ventils das Fluid aus dem System austreten kann, deutlich reduziert.

In vorteilhafter Weise lässt sich das erfindungsgemäße Ventil durch einen nasslaufenden, bürstenlosen Elektromotor antreiben, dessen Rotor vom Fluid umgeben ist. Alternativ kann durch Einsatz einer Magnetkupplung aber auch ein trockenlaufender Elektromotor vorteilhaft zum Einsatz kommen.

Die Anzahl der verschleissbehafteten Dichtungen kann auf diese Art reduziert - beziehungsweise ihre Verwendung vollständig vermieden werden. Damit reduziert sich dann auch das Risiko einer Leckage des Kühlmittels. Ebenso ergibt sich durch eine solche Ausführung des erfindungsgemäßen Ventils eine platzsparende, sehr kompakte Baugruppe für das Regelventil.

### Zeichnung

In der Zeichnung sind mehrere Ausführungsbeispiele der Erfindung dargestellt, die in der nachfolgenden Beschreibung näher erläutert werden.

Es zeigen:
Fig. 1 einen Querschnitt durch die Ventilkammer eines ersten Ausführungsbeispiels des erfindungsgemäßen Ventils mit eingesetzter Ventilklappe bei geschlossener Ventilstellung,
Fig. 2 einen weiteren Querschnitt durch die Ventilkammer des ersten Ausführungsbeispiels des erfindungsgemäßen Ventils bei geöffneter Ventilstellung,
Fig. 3 ein Ausführungsbeispiel einer Ventilklappe des erfindungsgemäßen Ventils,
Fig. 4 ein weiteres Ausführungsbeispiel einer Ventilklappe des erfindungsgemäßen Ventils,
Fig. 5 eine weitere Darstellung der Ventilklappe aus Figur 4,
Fig. 6 einen Querschnitt durch die Ventilkammer eines zweiten Ausführungsbeispiels des erfindungsgemäßen Ventils mit eingesetzten Ventilklappen bei geschlossenem Kühlerzweig,
Fig. 7 einen weiteren Querschnitt durch die Ventilkammer des zweiten Ausführungsbeispiels des erfindungsgemäßen Ventils mit eingesetzten Ventilklappen in Mittelstellung,
Fig. 8 eine Aussenansicht des zweiten Ausführungsbeispiels des erfindungsgemäßen Ventils gemäß Figur 6 und 7 und
Fig. 9 einen Querschnitt durch ein weiteres Ausführungsbeispiel einer Ventilkammer des erfindungsgemäßen Ventils mit eingesetzten Ventilklappen und einem angebauten Getriebe für die Welle (Drehachse) der Ventilklappen.

### Beschreibung der Ausführungsbeispiele

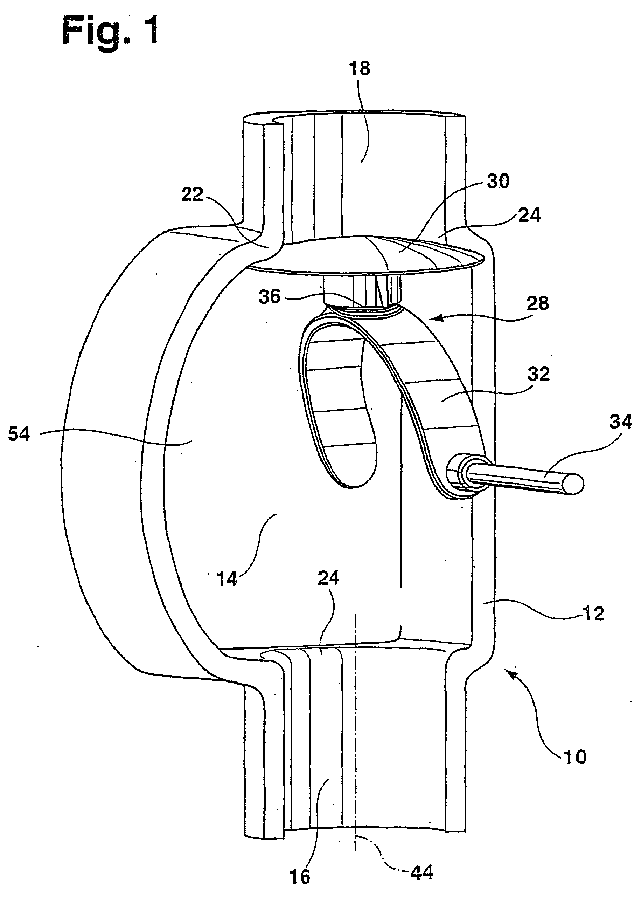

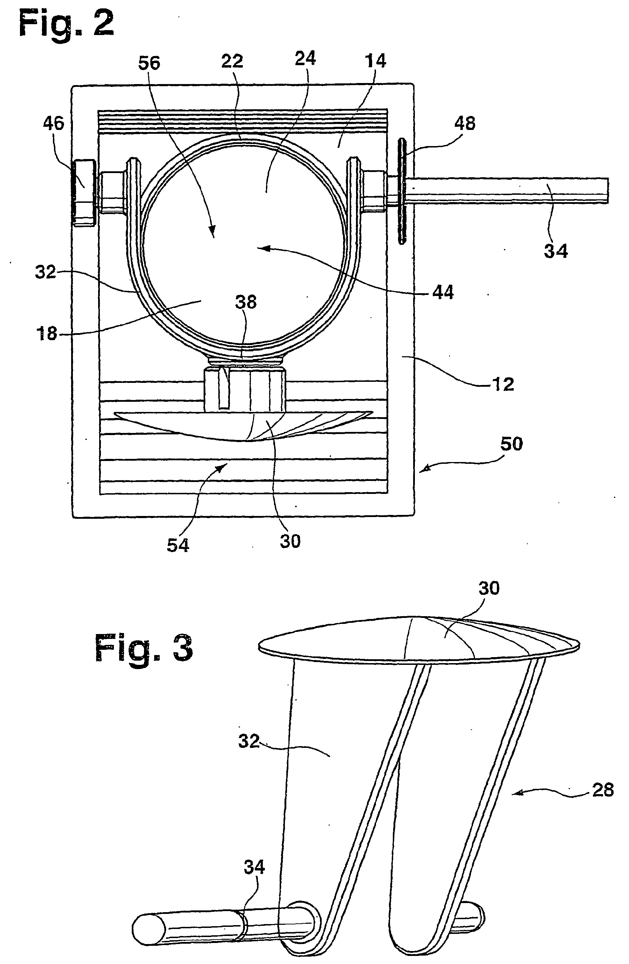

Das in Figur 1 und 2 im Querschnitt dargestellte, erfindungsgemäße Ventil 10 besitzt ein Ventilgehäuse 12 mit einer Ventilkammer 14, in die ein Einlasskanal 16 und ein Auslasskanal 18 führt. Die Ventilkammer 14 trägt einen innenseitig angeordneten Ventilsitz 22, der im dargestellten Ausführungsbeispiel einstückig mit dem Ventilgehäuse 12 ausgearbeitet ist. Der Ventilsitz 22 umgibt eine Ventilöffnung 24, die die Ventilkammer 14 mit dem Auslasskanal 18 verbinden.

In der Ventilkammer 14 ist eine Ventilklappe 28 angeordnet, die im Zusammenspiel mit dem Ventilsitz 22 die Ventilöffnung 24 verschließen und öffnen kann. Die Ventilklappe 28 besteht im dargestellten Ausführungsbeispiel aus einem Ventildichtkopf 30 und einem Ventilgestänge 32, das den Dichtkopf 30 mit einer Welle (Drehachse) 34 des Ventils 10 verbindet.

Die Ventilklappe 28 kann, wie es in Figur 3 dargestellt ist, einstückig ausgeformt sein. Auch ist es möglich und vorteilhaft, die welle 34 direkt an dem Ventilgestänge 32 der Ventilklappe 28 in der Art einer Kurbelwelle anzuformen. Der Ventildichtkopf 30 hat in diesem Ausführungsbeispiel in etwa eine pilzförmige Gestalt, die aber auch in anderen Ausführungsformen ein Ausschnitt aus einer Kugeloberfläche oder anderen, entsprechend geformten Oberflächen sein kann. So kann sich die Ventilklappe 28 gleichmäßig in den Ventilsitz 22 einschmiegen und die Ventilöffnung 24 gut abdichten. Um die Abdichtung des Ventils zu erhöhen, ist es zudem möglich den Ventildichtkopf 30 beziehungsweise den Ventilsitz 22 mit einem Elastomer zu versehen.

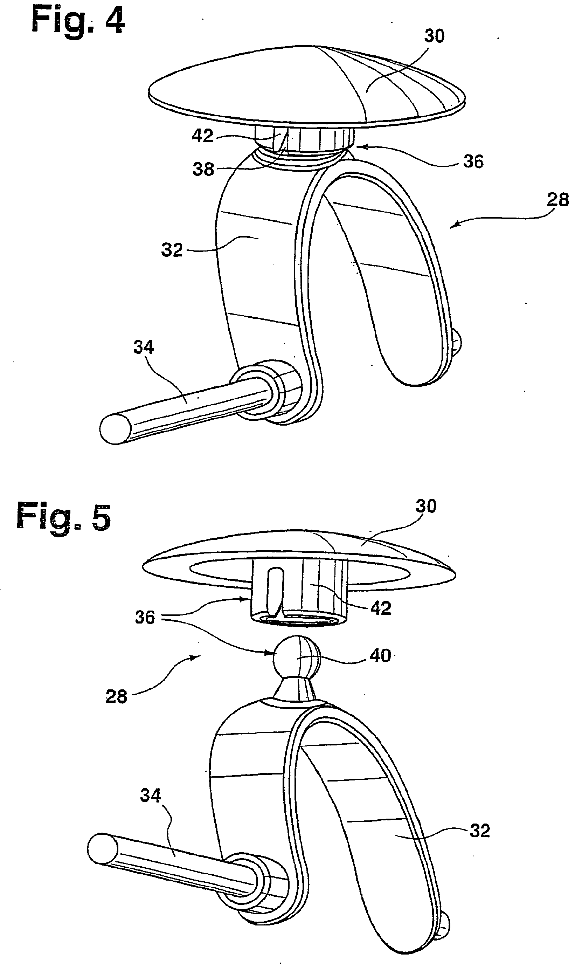

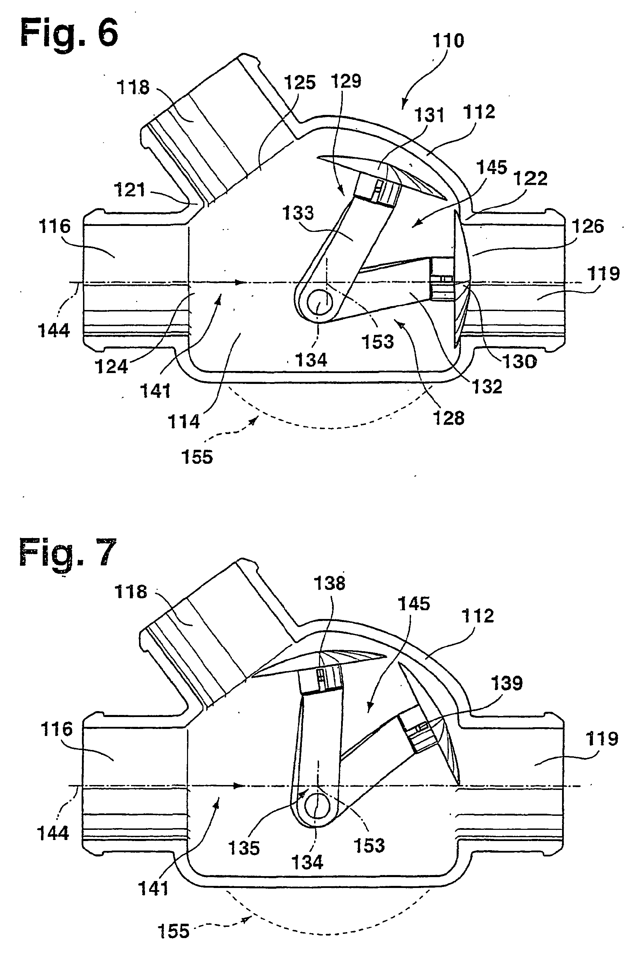

In Figur 4 und 5 ist ein alternatives und vorteilhaftes Ausführungsbeispiel der Ventilklappe 28 des erfindungsgemäßen Ventils 10 dargestellt. Die Ventilklappe 28 in Figur 4 und 5 ist zweiteilig und besitzt ein Gelenk 36 zwischen dem Ventilgestänge 32 und den Ventildichtkopf 30. Mit Hilfe dieses Gelenks 36 ist eine relative Bewegung des Dichtkopfes 30 in Bezug auf das Ventilgestänge 32 möglich. Durch diese Relativbewegung des Dichtkopfes 30 kann sich dieser besser in den Ventilsitz 22 der Ventilkammer 14 einpassen. Auch ermöglicht das Gelenk 36 auf einfache Art einen selbständigen Ausgleich von Maßabweichungen, die durch Fertigung und Verschleiß des Ventils auftreten können. Ein solcher selbständiger Ausgleich von Fertigungsfehlern oder Abnutzungserscheinungen ist mit einer starren Ventilklappe nicht möglich.

Bei dem in Figur 4 und 5 dargestellten Gelenk 36 handelt es sich um ein Kugelgelenk 38 wobei die Kugel 40 als Teil des Ventilgestänges 32 und die Kugelpfanne 42 als Teil des Dichtkopfes 30 ausgebildet ist. Die Kugel 40 ist im dargestellten Ausführungsbeispiel der Figur 4 in die Kugelpfanne 42 eingeclipst. Ebenfalls denkbar ist selbstverständlich auch die umgekehrte Anordnung, bei der der Ventildichtkopf 30 die Kugel trägt und die Kugelpfanne Teil des Ventilgestänges 32 ist.

Der Ventildichtkopf 30 ist über das Ventilgestänge 32 mit der Drehachse 34 verbunden. Die Drehachse 34 der Ventilklappe 28 des erfindungsgemäßen Ventils 10 ist exzentrisch in der Ventilkammer 14 angeordnet: In Figur 2 ist zu erkennen, dass die Drehachse 34 der Ventilklappe 28 in Bezug auf die Längsachse 44 der Ventilöffnungen 24 und 26 äussermittig verläuft.

Wie in Figur 2 dargestellt, läuft die exzentrische Welle 34 in zwei Lagern 46 und 48, die im dargestellten Ausführungsbeispiel im Gehäuse 12 der Ventilkammer 14 verankert sind. An einer Seite 50 der Ventilkammer 14 ist die Welle 34 (Drehachse) aus dem Ventilgehäuse 12 herausgeführt. Mit einem entsprechenden Stellmechanismus 52, der an die Welle 34 angeschlossen werden kann, in Figur 2 jedoch nicht dargestellt ist, ist die Ventilklappe 28 über die Welle 34 in der Ventilkammer 14 drehbar. Beim Öffnen des Ventils wird die Ventilklappe 28 durch Verdrehen der Welle 34 aus der Strömungsrichtung (Längsachse 44 in Figur 1 und 2) herausgedreht und in einen erweiterten Bereich 54 der Ventilkammer, dessen Querschnitt gegenüber dem Ein- und Auslasskanal deutlich vergrößert ist, gedreht.

Figur 2 zeigt das erfindungsgemäße Ventil 10 bei vollständiger Öffnung des Auslasskanals 18 in einer Ansicht in Strömungsrichtung. Der Ventildichtkopf 30 ist aus der Strömungsrichtung herausgedreht und befindet sich im erweiterten Bereich 54 der Ventilkammer 14. Das Ventilgestänge 32, das den Dichtkopf 30 mit der Welle 34 verbindet, ist im dargestellten Ausführungsbeispiel derart geformt, das der Strömungsquerschnitt nicht durch die Ventilklappe 28 und im Besonderen nicht durch das Ventilgestänge 32 abgeschattet wird. Aus diesem Grunde ist auch die Welle 34 im dargestellten Ausführungsbeispiel des erfindungsgemäßen Ventils 10 unterbrochen. Man sieht, dass die Ventilklappe 28 den vollen Rohrleitungsquerschnitt 56 des Auslasskanals 18 freigibt und die Strömung nicht umgelenkt wird. Durch die spezielle Form der Ventilklappe 28 und die exzentrische Lagerung der Welle 34 wird erreicht, dass der Druckabfall über dem geöffneten Ventil 10 minimiert wird.

In den Figuren 6 bis 8 ist ein weiteres Ausführungsbeispiel des erfindungsgemäßen Ventils dargestellt.

Figur 6 zeigt ein erfindungsgemäßes Ventil 110 mit einem Ventilgehäuse 112 und mit einer Ventilkammer 114, in die ein Einlasskanal 116, ein erster Auslasskanal 118 und ein zweiter Auslasskanal 119 führt. Die Ventilkammer 114 weist zwei innenseitig angeordnete Ventilsitze 121 und 122 auf, die im dargestellten Ausführungsbeispiel einstückig mit dem Ventilgehäuse 112 gearbeitet sind. Die Ventilsitze 121 und 122 umgeben jeweils eine Ventilöffnung 125 und 126, die die Ventilkammer 114 mit den Auslasskanälen 118 und 119 verbindet. In der Ventilkammer 114 befinden sich zwei Ventilklappen 128 und 129, die über eine gemeinsame Welle 134 drehbar gelagert sind. Die radialen Längen der beiden Ventilklappen 128 und 129 sind gleich, so dass die Einlass-Öffnung 124 beziehungsweise die Auslassöffnungen 125 und 126 in etwa auf dem Umfang eines - der Ventilkammer 114 einzuschreibenden - Kreises 155 mit Mittelpunkt 153 liegen. Die Welle 134 der Ventilklappen 128 und 129 ist exzentrisch in der Ventilkammer 114 angeordnet, so dass die Welle 134 die Längsachse 144 der Austrittsquerschnitte nicht schneidet sondern um eine Strecke 135 von dieser beabstandet ist. (Die Achse der Welle 134 geht nicht durch den Mittelpunkt 153 des Kreises 155.) Im Zusammenspiel mit den Ventilsitzen 121 und 122 können die Ventilklappen 128 und 129 die Ventilöffnungen 125 und 126 öffnen und schließen. Die Ventilklappen 128 und 129 bestehen im dargestellten Ausführungsbeispiel jeweils aus einem Ventildichtkopf 130 beziehungsweise 131 sowie einem Ventilgestänge 132 beziehungsweise 133. Ventildichtkopf 130 und Ventilgestänge 132 beziehungsweise 131 und 133 sind jeweils, wie zuvor ausführlich beschrieben wurde, über ein Kugelgelenk 138 beziehungsweise 139 in vorteilhafter Weise miteinander verbunden.

Das Ausführungsbeispiel in Figur 6 zeigt das erfindungsgemäße Ventil 110 mit einem ersten, vollständig geöffneten Auslasskanal 118 und einem zweiten, vollständig geschlossenen Auslasskanal 119. Figur 7 zeigt eine Mittelstellung des erfindungsgemäßen Ventils 110, bei der die beiden Auslasskanäle 118 und 119 jeweils zu Teil geöffnet sind. Die Strömungsrichtung in der Figur 6 und 7 ist in Pfeilrichtung 141, d.h. in der Zeichnung von links nach rechts.

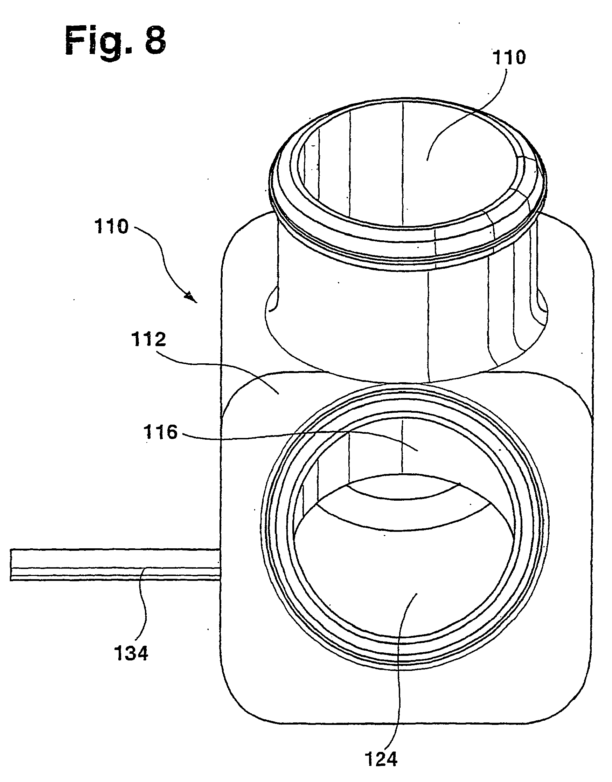

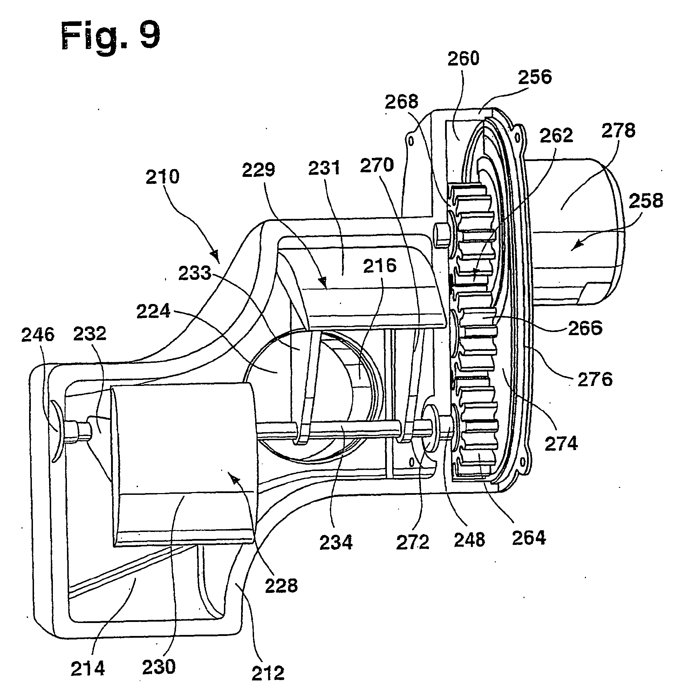

Figur 8 zeigt eine mögliche Ausführungsform des Ventilgehäuses 112 in einer Aussenansicht. Sichtbar ist die Einlassöffnung 124 sowie der erste Auslasskanal 118. Nicht zu sehen in dieser perspektivischen Darstellung ist der zweite Auslasskanal 119. Ebenfalls zu sehen in Figur 8 ist die aus dem Gehäuse herausgeführte Welle 134. In den Ausführungsbeispielen der Figur 6 bis 8 sitzen die beiden Ventilklappen 128 und 129 an der gleichen axialen Stelle auf der Welle 134 und sind nur durch einen Winkel 145 gegeneinander verschoben. Dadurch liegen der Einlasskanal 116 und die beiden Auslasskanäle 118 und 119 in einer Flucht. Denkbar und möglich ist jedoch auch eine Anordnung der Ventilklappen 128 und 129 in der Art, dass die Ventilklappen sich nebeneinander, d.h. axial versetzt auf der Welle 134 befinden, wie es beispielsweise auch in Figur 9 dargestellt ist.

In Figur 9 ist ein weiteres Ausführungsbeispiel des erfindungsgemäßen Ventils dargestellt.

Das in Figur 9 dargestellte erfindungsgemäße Ventil 210 hat ein Ventilgehäuse 212 mit einer Ventilkammer 214 und einem zusätzlichen Getriebegehäuse 256 an das ein Elektromotor 258 angebracht ist. In der Ventilkammer 214 befindet sich eine Welle 234, die - wie bereits zuvor ausführlich beschrieben - exzentrisch zu den Öffnungen der Ventilkammer 214 angeordnet ist. Die Welle 234 läuft in zwei Lagern 246 und 248 und ist durch das Ventilgehäuse 212 hindurch in einen Getrieberaum 260 des Getriebegehäuses 256 weitergeführt. Auf der Welle 234 des erfindungsgemäßen Ventils 210 sitzen axial beabstandet zwei Ventilklappen 228 und 229, die jeweils einen Ventildichtkopf 230 beziehungsweise 231 sowie ein Ventilgestänge 232 beziehungsweise 233 aufweisen.

In dem dargestellten Ausführungsbeispiel der Figur 9 sind die Ventilklappen 228 und 229 jeweils einstückig ausgebildet. Ein zusätzliches Gelenk 236 beziehungsweise 237 (analog zu Figur 4 und 5) zwischen Ventilgestänge 232 und dem Ventildichtkopf 230 beziehungsweise 233 und 231 ist aber auch hier möglich.

Die Ventilkammer 214 weist einen Einlasskanal 216 und zwei Auslasskanäle 218 und 219 auf, von denen in Figur 9 nur der Einlasskanal 216 mit der zugehörigen Ventilöffnung 224 zu sehen ist. Der erste Auslasskanal 218 wird durch die Ventilklappe 229 gesteuert und befindet sich ebenso wie der zweite Auslasskanal 219 auf der dem Einlasskanal 216 gegenüberliegenden Seite der Welle 234 des Ventilgehäuses 214. Der Auslasskanal 218 beziehungsweise der zweite Auslasskanal 219 münden jeweils in eine - in Figur 9 nicht dargestellte - Ventilöffnung 225 beziehungsweise 226 der Ventilkammer 212.

Einstückig mit dem Ventilgehäuse 214 ist im dargestellten Ausführungsbeispiel des erfindungsgemäßen Ventils 210 das Getriebegehäuse 256 ausgebildet. In dem Getrieberaum 260 des Getriebegehäuses 256 ist ein Getriebe 262 für den antreibenden Motor 258 untergebracht. Im Ausführungsbeispiel besteht das Getriebe 262 aus drei Zahnrädern 264, 266 und 268, die das Drehmoment des Elektromotors 258 auf die Welle 234 des erfindungsgemäßen Ventils 210 übertragen. Dazu ist das Zahnrad 268 fest mit der Antriebswelle 270 des Elektromotors 258 verbunden. Über das Zwischenzahnrad 266 wird das Drehmoment des Elektromotors 258 mit entsprechender Drehzahl auf das Zahnrad 264 übertragen, das wiederum fest auf der Drehachse 234 des Ventils 210 montiert ist.

Andere, als das in Figur 9 gezeigte Zähnradgetriebe sind zum Antrieb der Welle 234 ebenso denkbar.

Der Getrieberaum 260 ist im dargestellten Ausführungsbeispiel gegenüber der Ventilkammer 214 nicht abgedichtet, so dass das Getriebe 262 in dem zu regulierenden Fluid arbeitet. Eine spaltbehaftete Scheibe 272, die aus Gummi oder einem anderen Material gefertigt sein kann, und durch die die Welle 234 des Ventils 210 hindurchgeführt ist, hält grobe Schmutzpartiklel, die sich im Kühlmedium befinden können von dem nasslaufenden Getriebe fern. Ein eventuell erforderlicher Druckausgleich kann auch durch ein feines Sieb oder eine Membran erfolgen.

Der Getrieberaum 260 ist durch einen Gehäusedeckel 274 und einen O-Ring 276, der zwischen dem Getriebegehäuse 256 und dem Gehäusedeckel 274 einliegt und den Getrieberaum 260 statisch abdichtet, verschlossen.

Im dargestellten Ausführungsbeispiel trägt der Gehäusedeckel 274 des Getriebegehäuses 256 auch den Elektromotor 258, der die Welle 234 des Ventils 210 antreibt. Das Gehäuse 278 des Elektromotors ist im Ausführungsbeispiel einstückig am Gehäusedeckel 274 des Getriebegehäuses 256 ausgebildet. Alternativerweise lässt sich das Motorengehäuse 278 aber auch durch Verschrauben, Vernieten, Verkleben oder anderen - dem Fachmann geläufigen - Befestigungsmethoden an dem Getriebegehäuse 256 oder an anderer Stelle anbringen. Der Elektromotor 258 des in der Figur 9 dargestellten Ausführungsbeispiels ist ein im Kühlfluid arbeitender bürstenloser Gleichstrommotor 259. Der in Figur 9 nicht explizit dargestellte Rotor (Magnet) des Elektromotors 259 ist somit nicht gegen das Getriebe 262 und das im Getrieberaum 260 befindliche Kühlfluid abgedichtet.

Die Erfindung ist nicht auf die beschriebenen Ausführungsbeispiele eines Exzenterventils mit maximal zwei Ventilklappen beschränkt.

Sie lässt sich ebenso vorteilhaft auch bei einem Ventil verwirklichen, das weitere Ein- oder Auslasskanäle und entsprechende Ventilklappen besitzt.

Auch ist das erfindungsgemäße Ventil nicht beschränkt auf die Verwendung gleicher radialer Längen bei den Ventilklappen. Aufgrund von baulichen Gegebenheiten oder anderen Anforderungen kann das Ventilgehäuse auch so gestaltet werden, dass die einzelnen Ventilklappen eines Ventiles unterschiedlich lang sind. Dies erfordert lediglich die Anpassung der Ausmaße der Ventilkammer an die Länge des Ventilgestänges.

Das erfindungsgemäße Ventil ist nicht beschränkt auf die Verwendung von einstückig am Ventilgehäuse ausgebildeten Ventilsitzen. Die Form und das Material sowohl der Ventilsitze als auch der Ventildichtköpfe können in anderen Ausführungsformen des erfindungsgemäßen Ventils variiert sein.

Durch eine geeignete Materialauswahl lässt sich erreichen, dass ein eventuell an den Ventilsitzen auftretender Materialverschleiss oder Abrieb durch die selbständige Anpassung der Orientierung des Ventildichtkopfes ausgeglichen wird.

Das erfindungsgemäße ventil ist nicht beschränkt auf die Verwendung eines Kugelgelenkes zwischen dem Ventilgestänge und dem Ventildichtkopf. Andere, dem Fachman geläufige Gelenktypen sind ebenfalls denkbar.

Ebenso ist das erfindungsgemäße ventil nicht beschränkt auf die Verwendung des dargestellten Zahnradgetriebes. Ein Getriebe aus Schnecke und Schneckenrad ist für das erfindungsgemäße Ventil ebenso vorstellbar wie andere dem Fachmann bekannte Getriebearten.

Das erfindungsgemäße Ventil ist nicht beschränkt auf die Verwendung eines nasslaufenden, bürstenlosen Elektromotors. Der Elektomotor kann auch vollständig gegen das Getriebe und die Ventilkammer abgedichtet sein, so dass die Verwendung anderer Antriebssysteme für das Ventil ebenfalls möglich ist. Im Speziellen kann durch den Einsatz einer Magnetkupplung ein trockenlaufender Elektromotor vorteilhaft zum Einsatz kommen.

Ebenso ist das erfindungsgemäße Ventil nicht beschränkt auf die Verwendung eines Getriebes, im Speziellen eines nasslaufenden Getriebes.

## Patentansprüche

1. Ventil zur Steuerung von Volumenströmen im Heiz- und Kühlsystem eines Kraftfahrzeuges mit einem Ventilgehäuse (12, 112, 212) und einer Ventilkammer (14, 114, 214), von der mindestens ein Einlass-Kanal (16,116,216) und mindestens ein Auslass-Kanal (18,118,218) abzweigen, sowie mit mindestens einer in der Ventilkammer (14,114,214) angeordneten, um die Achse einer Welle (34,134,234) drehbaren Ventilklappe (28,128,228), die ein Ventilgestänge (30,130,230) und einen Ventildichtkopf (32,132,232) hat, der mit mindestens einem Ventilsitz (22,122,222) der Ventilkammer (14,114,214) zusammenwirkt, wobei die Welle (34,134,234) der mindestens einen Ventilklappe (28,128,228) exzentrisch in der Ventilkammer (14,114,214) angeordnet ist, **dadurch gekennzeichnet, dass** der Ventildichtkopf (32,132,232) der mindestens einen Ventilklappe (28,128,228) relativ zu deren Ventilgestänge (30,130,230) beweglich ist.

2. Ventil nach Anspruch 1, **dadurch gekennzeichnet, dass** der Ventildichtkopf (32,132,232) der mindestens einen Ventilklappe (28,128,228) über ein Gelenk (36,136,236) mit dem Ventilgestänge (30,130,230) verbunden ist.

3. Ventil nach Anspruch 1, **dadurch gekennzeichnet, dass** die Ventilklappe (28,128,228) mindestens zweiteilig ist.

4. Ventil nach Anspruch 2 oder 3, **dadurch gekennzeichnet, dass** ein Kugelgelenk (38,138) zwei Teile der Ventilklappe (28,128,228) miteinander verbindet.

5. Ventil nach einem der vorhergehenden Ansprüche, **dadurch gekennzeichnet, dass** der Ventildichtkopf (32,132,232) der Ventilklappe (28,128,228) durch einen in etwa pilzförmigen Ventilteller gebildet ist.

6. Ventil nach einem der vorhergehenden Ansprüche, **dadurch gekennzeichnet, dass** der mindestens eine Ventilsitz (22,122,222) einstückig mit der Ventilkammer (14,114,214) ausgebildet ist.

7. Ventil nach Anspruch 5, **dadurch gekennzeichnet, dass** der Ventildichtkopf (32,132,232) der Ventilklappe (28,128,228) und / oder der Ventilsitz (22,122,222) der Ventilkammer (14,114,214) zusätzliche, elastische Dichtmaterialien zur Abdichtung des Ventils (10,110,210) aufweisen.

8. Ventil nach einem der vorhergehenden Ansprüche, **dadurch gekennzeichnet, dass** die Strömungsrichtung der Kühlmittelvolumenströme im Ventil von der Welle (34,134,234) der Ventilklappe (28,128,228) auf den Ventildichtkopf (32,132,232) zu verläuft.

9. Ventil nach einem der vorhergehenden Ansprüche, **dadurch gekennzeichnet, dass** das Ventilgestänge (32,132,232) und / oder die Ventilkammer (14,114,214) derart geformt sind, dass bei geöffnetem Zustand des Ventils (10,110,210) keine Versperrung des Strömungsquerschnittes in der Ventilkammer (14,114,214) erfolgt.

10. Ventil nach einem der vorhergehenden Ansprüche, **dadurch gekennzeichnet, dass** die Ventilkammer (14,114,214) einen zweiten Auslasskanal (119,219) mit zugehörigem Ventilsitz (21,121,221) hat.

11. Ventil nach Anspruch 10, **dadurch gekennzeichnet, dass** in der Ventilkammer (14,114,214) eine zweite Ventilklappe (29,129,229) vorhanden ist.

12. Ventil nach Anspruch 11, **dadurch gekennzeichnet, dass** die in der Ventilkammer (14,114,214) vorhandenen Ventilklappen (28,128,228;29,129,229) auf einer gemeinsamen Welle (34,134,234) sitzen und um die Achse dieser Welle (34,134,234) drehbar sind.

13. Ventil nach Anspruch 11, **dadurch gekennzeichnet, dass** die in der Ventilkammer (14,114,214) vorhandenen Ventilklappen (28,128,228;29,129,229) die gleichen radialen Längen aufweisen.

14. Ventil nach einem der vorhergehenden Ansprüche, **dadurch gekennzeichnet, dass** die Welle (34,134,234) der mindestens einen Ventilklappe (28,128,228;29,129,229) aus der Ventilkammer (14,114,214) herausgeführt ist

15. Ventil nach einem der vorhergehenden Ansprüche, **dadurch gekennzeichnet, dass** die Welle (34,134,234) der mindestens einen Ventilklappe (28,128,228;29,129,229) über einen Stellantrieb (52,152,252) bewegbar ist.

16. Ventil nach Anspruch 15, **dadurch gekennzeichnet, dass** der Stellantrieb (52,152,252) einen Elektromotor (258) und ein Getriebe (262) aufweist.

17. Ventil nach Anspruch 16, **dadurch gekennzeichnet, dass** das Getriebe (262) von dem zu regulierenden Volumenstsrom umspült ist.

18. Ventil nach Anspruch 16, **dadurch gekennzeichnet, dass** das Getriebe (262) von einem bürstenlosen Gleichstrommotor (259) angetrieben ist, dessen Rotor in der zu regelnden Kühlflüssigkeit läuft.

## Claims

1. Valve for the control of volumetric flows in the heating and cooling system of a motor vehicle, with a valve housing (12, 112, 212) and a valve chamber (14, 114, 214), from which at least one inlet duct (16, 116, 216) and at least one outlet duct (18, 118, 218) branch off, and with at least one valve flap (28, 128, 228) which is arranged in the valve chamber (14, 114, 214) and is rotatable about the axis of a shaft (34, 134, 234) and which has a valve linkage (30, 130, 230) and a valve-sealing head (32, 132, 232) which cooperates with at least one valve seat (22, 122, 222) of the valve chamber (14, 114, 214), the shaft (34, 134, 234) of the at least one valve flap (28, 128, 228) being arranged eccentrically in the valve chamber (14, 114, 214), **characterized in that** the valve-sealing head (32, 132, 232) of the at least one valve flap (28, 128, 228) is movable in relation to the valve linkage (30, 130, 230) of the latter.

2. Valve according to Claim 1, **characterized in that** the valve-sealing head (32, 132, 232) of the at least one valve flap (28, 128, 228) is connected to the valve linkage (30, 130, 230) via a joint (36, 136, 236).

3. Valve according to Claim 1, **characterized in that** the valve flap (28, 128, 228) is in at least two parts.

4. Valve according to Claim 2 or 3, **characterized in that** a ball joint (38, 138) connects two parts of the valve flap (28, 128, 228) to one another.

5. Valve according to one of the preceding claims, **characterized in that** the valve-sealing head (32, 132, 232) of the valve flap (28, 128, 228) is formed by an approximately mushroom-shaped valve disc.

6. Valve according to one of the preceding claims, **characterized in that** the at least one valve seat (22, 122, 222) is produced in one piece with the valve chamber (14, 114, 214).

7. Valve according to Claim 5, **characterized in that** the valve-sealing head (32, 132, 232) of the valve flap (28, 128, 228) and/or the valve seat (22, 122, 222) of the valve chamber (14, 114, 214) have/has additional elastic sealing materials for sealing off the valve (10, 110, 210).

8. Valve according to one of the preceding claims, **characterized in that** the direction of flow of the coolant volumetric flows in the valve runs from the shaft (34, 134, 234) of the valve flap (28, 128, 228) towards the valve-sealing head (32, 132, 232).

9. Valve according to one of the preceding claims, **characterized in that** the valve linkage (32, 132, 232) and/or the valve chamber (14, 114, 214) are/is shaped in such a way that, in the open state of the valve (10, 110, 210), there is no shut-off of the flow cross section in the valve chamber (14, 114, 214).

10. Valve according to one of the preceding claims, **characterized in that** the valve chamber (14, 114, 214) has a second outlet duct (119, 219) with an associated valve seat (21, 121, 221).

11. Valve according to Claim 10, **characterized in that** a second valve flap (29, 129, 229) is present in the valve chamber (14, 114, 214).

12. Valve according to Claim 11, **characterized in that** the valve flaps (28, 128, 228; 29, 129, 229) present in the valve chamber (14, 114, 214) are seated on a common shaft (34, 134, 234) and are rotatable about the axis of this shaft (34, 134, 234).

13. Valve according to Claim 11, **characterized in that** the valve flaps (28, 128, 228; 29, 129, 229) present in the valve chamber (14, 114, 214) have the same radial lengths.

14. Valve according to one of the preceding claims, **characterized in that** the shaft (34, 134, 234) of the at least one valve flap (28, 128, 228; 29, 129, 229) is led out of the valve chamber (14, 114, 214).

15. Valve according to one of the preceding claims, **characterized in that** the shaft (34, 134, 234) of the at least one valve flap (28, 128, 228; 29, 129, 229) is movable via an actuating drive (52, 152, 252).

16. Valve according to Claim 15, **characterized in that** the actuating drive (52, 152, 252) has an electric motor (258) and a gear (262).

17. Valve according to Claim 16, **characterized in that** the volumetric flow to be regulated washes around the gear (262).

18. Valve according to Claim 16, **characterized in that** the gear (262) is driven by a brushless direct-current motor (259), the rotor of which runs in the cooling liquid to be regulated.

## Revendications

1. Soupape pour commander des débits volumétriques dans le système de chauffage et de refroidissement d'un véhicule, comprenant un boîtier de soupape (12, 112, 212) et d'une chambre de soupape (14, 114, 214) de laquelle partent au moins un canal d'admission (16, 116, 216) et au moins un canal d'échappement (18, 118, 218), et au moins un clapet de soupape (28, 128, 228) disposé dans la chambre de soupape (14, 114, 214), pivotant autour de l'axe d'un arbre (34, 134, 234), le clapet ayant une tringlerie de soupape (30, 130, 230) et une tête d'étanchéité de soupape (32, 132, 232) coopérant avec au moins un siège de soupape (22, 122, 222) de la chambre de soupape (14, 114, 214), l'arbre (34, 134, 234) de l'au moins un clapet de soupape (28, 128, 228) étant disposé de manière excentrique dans la chambre de soupape (14, 114, 214),
**caractérisée en ce que**
la tête d'étanchéité de soupape (32, 132, 232) d'au moins un clapet (28, 128, 228) est mobile par rapport à sa tringlerie (30, 130, 230).

2. Soupape selon la revendication 1,
**caractérisée en ce que**
la tête d'étanchéité de soupape (32, 132, 232) de l'au moins un clapet (28, 128, 228) est reliée à la tringlerie (30, 130, 230) par une articulation (36, 136, 236).

3. Soupape selon la revendication 1,
**caractérisée en ce que**
le clapet de soupape (28, 128, 228) est au moins en deux parties.

4. Soupape selon la revendication 2 ou 3,
**caractérisée en ce qu'**
un joint à rotule (38, 138) raccorde entre elles deux parties du clapet de soupape (28, 128, 228).

5. Soupape selon l'une des revendications précédentes,
**caractérisée en ce que**
la tête d'étanchéité de soupape (32, 132, 232) du clapet (28, 128, 228) est une tête de soupape ayant à peu près la forme d'un champignon.

6. Soupape selon l'une des revendications précédentes,
**caractérisée en ce qu'**
au moins un siège de soupape (22, 122, 222) est formé d'une seule pièce avec la chambre de soupape (14, 114, 214).

7. Soupape selon la revendication 5,
**caractérisée en ce que**
la tête d'étanchéité de soupape (32, 132, 232) du clapet (28, 128, 228) et/ou le siège de soupape (22, 122, 222) de la chambre de soupape (14, 114, 214) présentent des matériaux d'étanchéité supplémentaires, élastiques, pour étanchéifier la soupape (10, 110, 210).

8. Soupape selon l'une des revendications précédentes,
**caractérisée en ce que**
le sens d'écoulement des débits volumétriques du liquide réfrigérant dans la soupape va de l'arbre (34, 134, 234) du clapet (28, 128, 228) vers la tête d'étanchéité de soupape (32, 132, 232).

9. Soupape selon l'une des revendications précédentes,
**caractérisée en ce que**
la tringlerie (30, 130, 230) et/ou la chambre de soupape (14, 114, 214) sont formées de telle sorte que lorsque la soupape (10, 110, 210) est ouverte, il n'y a aucun obstacle de la section d'écoulement dans la chambre de soupape (14, 114, 214).

10. Soupape selon l'une des revendications précédentes,
**caractérisée en ce que**
la chambre de soupape (14, 114, 214) est munie d'un deuxième canal d'échappement (119, 219) avec un siège de soupape correspondant (21, 121, 221).

11. Soupape selon la revendication 10,
**caractérisée en ce qu'**
un deuxième clapet (29, 129, 229) est présent dans la chambre de soupape (14, 114, 214).

12. Soupape selon la revendication 11,
**caractérisée en ce que**
des clapets de soupape (28, 128, 228 ; 29, 129, 229) présents dans la chambre de soupape (14, 114, 214) reposent sur un arbre commun (34, 134, 234) et peuvent pivoter autour de l'axe de cet arbre (34, 134, 234).

13. Soupape selon la revendication 11,
**caractérisée en ce que**
les clapets de soupape (28, 128, 228 ; 29, 129, 229) présents dans la chambre de soupape (14, 114, 214) présentent les mêmes longueurs radiales.

14. Soupape selon l'une des revendications précédentes,
**caractérisée en ce que**
l'arbre (34, 134, 234) d'au moins un clapet (28, 128, 228 ; 29, 129, 229) sort de la chambre de soupape (14, 114, 214).

15. Soupape selon l'une des revendications précédentes,
**caractérisée en ce que**
l'arbre (34, 134, 234) d'au moins un clapet (28, 128, 228 ; 29, 129, 229) est mobile grâce à un mécanisme de commande (52, 152, 252).

16. Soupape selon la revendication 15,
**caractérisée en ce que**
le mécanisme de commande (52, 152, 252) présente un moteur électrique (258) et un engrenage (262).

17. Soupape selon la revendication 16,
**caractérisée en ce que**
l'engrenage (262) est baigné par le débit volumétrique à réguler.

18. Soupape selon la revendication 16,
**caractérisée en ce que**
l'engrenage (262) est entraîné par un moteur à courant continu (259) dont le rotor passe dans le liquide de refroidissement à réguler.
